(19) Europäisches Patentamt

European Patent Office

Office européen des brevets

(11) **EP 4 206 720 B1**

(12) # EUROPEAN PATENT SPECIFICATION

(45) Date of publication and mention
of the grant of the patent:
**27.08.2025   Bulletin 2025/35**

(21) Application number: **22207892.5**

(22) Date of filing: **16.11.2022**

(51) International Patent Classification (IPC):
*H01Q 21/22* (2006.01)      *H01Q 21/28* (2006.01)
*G01S 7/28* (2006.01)      *G01S 7/292* (2006.01)
*G01S 13/76* (2006.01)      *G01S 13/931* (2020.01)
*H01Q 21/00* (2006.01)      *H01Q 21/06* (2006.01)

(52) Cooperative Patent Classification (CPC):
**G01S 13/931; G01S 7/2813; G01S 7/2925;
G01S 13/762; H01Q 21/0075; H01Q 21/065;
H01Q 21/22; H01Q 21/28**

(54) **BEAM SHAPING ARRAY FOR COMPACT DUAL-RANGE AUTOMOTIVE RADAR**

STRAHLFORMUNGSANORDNUNG FÜR KOMPAKTES ZWEIBEREICHS-AUTORADAR

RÉSEAU DE MISE EN FORME DE FAISCEAU POUR RADAR AUTOMOBILE COMPACT À DOUBLE PORTÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **29.12.2021   US 202117564826**

(43) Date of publication of application:
**05.07.2023   Bulletin 2023/27**

(73) Proprietor: **NXP B.V.
5656 AG Eindhoven (NL)**

(72) Inventors:
• **Ren, Dongyin
5656 AG Eindhoven (NL)**
• **Wu, Ryan Haoyun
5656 AG Eindhoven (NL)**
• **Ravindran, Satish
5656 AG Eindhoven (NL)**

(74) Representative: **Schmütz, Christian Klaus
Johannes
NXP Semiconductors Germany GmbH
Intellectual Property Group
Beiersdorfstr. 12
22529 Hamburg (DE)**

(56) References cited:
**US-A1- 2015 029 072      US-A1- 2017 309 997**

• **ABDOLAHI MOHSEN ET AL: "Design and
analysis performance of a new patch array
antenna for SSR", 2017 PROGRESS IN
ELECTROMAGNETICS RESEARCH SYMPOSIUM
- SPRING (PIERS), IEEE, 22 May 2017
(2017-05-22), pages 2539 - 2545, XP033301306,
[retrieved on 20180116], DOI: 10.1109/
PIERS.2017.8262180**
• **"Substrate-Integrated Millimeter-Wave Antennas
for Next-Generation Communication and Radar
Systems", 23 April 2021, JOHN WILEY & SONS,
INC., article QING XIANMING ET AL: "Substrate
Integrated Antennas for Millimeter Wave
Automotive Radars", pages: 211 - 240,
XP055886866**
• **GUO Y JAY ET AL: "Quasi-Optical Multi-Beam
Antenna Technologies for B5G and 6G mmWave
and THz Networks: A Review", IEEE OPEN
JOURNAL OF ANTENNAS AND PROPAGATION,
IEEE, vol. 2, 30 June 2021 (2021-06-30), pages
807 - 830, XP011867688, [retrieved on 20210722],
DOI: 10.1109/OJAP.2021.3093622**

## Description

## Field of the Invention

The present invention is directed in general to radar systems and associated methods of operation. In one aspect, the present invention relates to an automotive radar system which uses a beam shaping transmit antenna array and associated methods of operation.

## Description of the Related Art

To improve the safety of vehicle and passengers, Advanced Driver Assistance Systems (ADAS) systems use radar-based detection to provide reliable and accurate details of a vehicle's surroundings and to assist drivers to sense the on-road potential hazards in case of blocked vision or poor visibility conditions. ADAS radars operate by transmitting or radiating signals from transmitting antennas on a vehicle so that, when the transmitted radar signal hits a target and is reflected back to the vehicle, the target return signal is received by a radar front-end (FE) unit and processed by a radar controller processing unit. In terms of function, automotive radar systems can be categorized in terms of a detection distance measure, such as a long-range radar (LRR), medium range radar (MRR), and short-range radar. In each category, the radiation pattern of a transmit antenna array can be manipulated for target detection in a specified direction and distance range by controlling the phase and amplitude of the excitation sources. Traditionally, beam forming techniques have been used to form of a large directional antenna shape by combining propagation signals from arrangement of small nondirectional antennas. While beam forming techniques have been developed for reducing side lobe levels and for shrinking/widening/steering the main beam, the existing radar systems are extremely difficult at a practical level by virtue of the balancing performance, complexity, and cost requirements of providing radar transmit antennas which can generate radiation patterns that directly translate to real-world range coverage requirements in a compact and cost-effective way.

Document US 2017/309997 A1 relates to radar system for vehicles using a shaped antenna pattern.

Document "Design and analysis performance of a new patch array antenna for SSR", from ABDOLAHI MOHSEN ET AL, in PROGRESS IN ELECTROMAGNETICS RESEARCH SYMPOSIUM - SPRING (PIERS), IEEE, 22 May 2017 (2017-05-22), pages 2539-2545, relates to an analysis and design of a microstrip patch array antenna with reduced back radiation for secondary surveillance radar application.

Document "Substrate Integrated Antennas for Millimeter Wave Automotive Radars" from Qing Xianming ET AL, in: "Substrate-Integrated Millimeter-Wave Antennas for Next-Generation Communication and Radar Systems", 23 April 2021 (2021-04-23), John Wiley & Sons, relates to substrate integrated antennas for 24 GHz and 77 GHz automotive radars.

## BRIEF DESCRIPTION OF THE DRAWINGS

The present invention is provided by the radar system according to claim 1 or the method for operating a radar system as set out in claim 4 and may be understood, and its numerous objects, features and advantages obtained, when the following detailed description of a preferred embodiment is considered in conjunction with the following drawings.

Figure 1 depicts a simplified schematic block diagram of an LFM MIMO automotive radar system which employs a dual-range beam shaping transmit antenna array in accordance with selected embodiments of the present disclosure.

Figure 2 depicts a perspective and plan view of a dual-range beam shaping transmit antenna array structure in accordance with selected embodiments of the present disclosure.

Figure 3 depicts a plan view layout of a feeding network layer which implements a single-input power divider circuit in accordance with selected embodiments of the present disclosure.

Figure 4 depicts a power magnitude heat map of the feeding network layer shown in Figure 3.

Figure 5 depicts a circuit layout comparison of a conventional feeding network and a stacked dual-range beam shaping transmit antenna array in accordance with selected embodiments of the present disclosure.

Figure 6A depicts the desired range coverage area of the long range and medium range radar for automotive radar system.

Figure 6B depicts an ideal normalized range vs. angle of the MIMO radar with proposed weighting and phase offset a dual-range beam shaping transmit antenna array in accordance with selected embodiments of the present disclosure.

Figure 7A depicts a normalized two-way radiation pattern of an automotive radar system using a dual-range beam shaping transmit antenna array in accordance with selected embodiments of the present disclosure.

Figure 7B depicts the normalized range coverage of a dual-range beam shaping transmit antenna array in accordance with selected embodiments of the present disclosure.

Figure 8A depicts a normalized two-way radiation pattern of an automotive radar system using a conventional long-range transmit antenna array.

Figure 8B depicts the normalized range coverage of an automotive radar system using a conventional long-range transmit antenna array.

Figure 9 illustrates a simplified flow chart showing the steps for designing and constructing a dual-range beam shaping transmit antenna array in accordance with selected embodiments of the present disclosure.

DETAILED DESCRIPTION

A dual-range automotive radar system, apparatus, and methodology are described for detecting one or more targets with a compact beam shaping antenna array that supports simultaneous long-range and mid-range coverage. To this end, the compact beam shaping antenna array includes a stacked plurality of transmit antennas and feeding network to generate a smooth two-way antenna pattern with minimized deep nulls and high lobes, thereby eliminating blind angles and optimizing range coverage. In selected embodiments, the compact beam shaping antenna array includes a plurality of transmit antenna or radiator elements in an upper layer that is stacked over an aperture-coupled power dividing feeding network in a lower layer which enables flexible control of the power distribution and guarantees decent isolation between radiation from discontinuity of feeding network and radiators. By forming the power dividing feeding network as a patterned layer of conductor elements to define a central coupled-line coupler connected between a pair of unequal power dividers, the compact beam shaping antenna array provides an all-passive array that may be used for both long-range and mid-range coverages in one compact vertically stack-up structure, thereby avoiding any requirement of multiple excitation sources or different antenna array setups for long-range and mid-range coverages individually.

By way of background to the present disclosure, automotive radar systems can be classified as long-range radars (LRR), medium-range radars (MRR), and short-range radars. As will be appreciated, different range radars have different performance requirements in the field of view (FOV). For example LRR requires a high gain and a narrow FOV, while MRR requires a relatively lower gain and a wider FOV. To meet specific FOV requirements, the radiation pattern of a transmit antenna array can be manipulated by controlling the phase and amplitude of the excitation sources. While beam forming techniques have been developed to reduce side lobe levels and to shrink/widen/steer the main beam for a specified range, existing radar solutions do not generate a radiation pattern that directly translates to real-world range coverage requirement (peak range in the central direction and wide field-of view/flat gain in off-central direction) in a compact and cost-effective way. In addition, existing antenna implementations developed for automotive radar are typically designed for a single range radar (e.g., either LRR or MRR). As a result, multi-range radar systems typically include multiple antenna array setups that are switched for long-range radar (LRR)/mid-range radar (MRR), or that required bulky feeding networks. However, there are a number of drawbacks to such multi-array solutions, including poor power efficiency because of power waste due to switch loss. In addition, larger areas are required to construct multiple antennas. There are also signal processing costs as the baseband processing requirements become more complex. Another drawback from existing radar system solutions is that bulky feeding networks require extra room on the antenna board which can limit the available number of radiators and/or force the radiators to be spaced further apart. The larger spacing between radiators results in angular ambiguity and more pronounced grating lobes. In addition, the undesired radiation due to discontinuity of feeding network may affect the radiation performance of the antennas as well.

To address these deficiencies from conventional approaches and others known to those skilled in the art, there is disclosed herein a method and apparatus for using a compact dual-range automotive radar beam shaping array to simultaneously support both medium- and long-range radars (MLRRs) by using a cost-effective passive feeding network with designed power distribution and phase progression without any metal via, transition waveguide or lumped component. This may be implemented by stacking the passive feeding network and radiators on different sides of a sharing ground layer where small coupling apertures allow the power coupling from the passive feeding network to the radiators. By controlling the layout and structure of the conductive elements in the passive feeding network and the coupling aperture dimensions in the sharing ground layer, the power distribution can be finely tuned without requiring any changes or switching of the radiating antenna structure. In addition, the passive feeding network and radiators may be vertically stacked up so that more radiators can be placed closely together on the radiating layer, thereby mitigating grating lobe issues for the MIMO array.

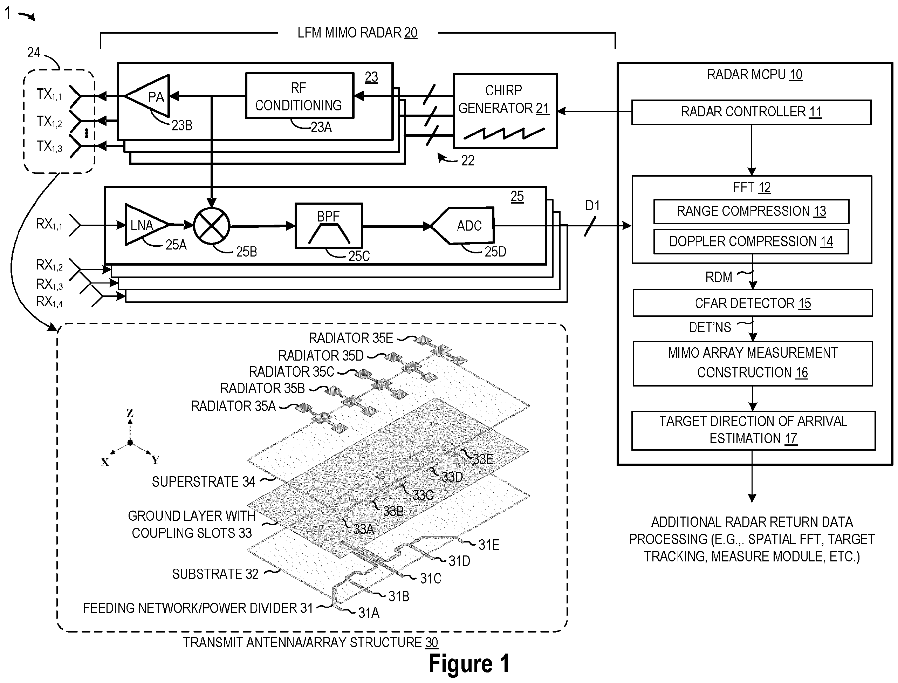

To provide additional details for an improved contextual understanding of the present disclosure, reference is now made to Figure 1 which depicts a simplified schematic block diagram of an automotive radar system 1 which includes one or more distributed a Linear Frequency Modulation (LFM) multiple-input, multiple output (MIMO) automotive radar front-end devices 20 connected between a radar controller processor 10 and a dual-range beam shaping transmit antenna array 24 in accordance with selected embodiments of the present disclosure. In selected embodiments, each LFM MIMO radar front-end device 20 may be embodied as a line-replaceable unit (LRU) or modular component that is designed to be replaced quickly at an operating location. Similarly, the radar controller processor 10 may be embodied as a line-replaceable unit (LRU) or modular component. As will be appreciated, any desired number of LFM MIMO radar front-end devices 20 may be used. In addition, the depicted radar system 1 may be implemented in integrated circuit form with the distributed LFM MIMO radar front-end devices 20 and the radar controller processor 10 formed with separate integrated circuits (chips) or with a single chip, depending on the application.

Each distributed LFM MIMO radar front-end device 20 includes one or more transmitting antenna elements $TX_i$ and receiving antenna elements $RX_j$ connected, respectively, to one or more radio-frequency (RF) transmitter (TX) units 23 and receiver (RX) units 25. For example, the LFM MIMO radar front-end device 20 is shown as including individual antenna elements (e.g., $TX_{1,i}$, $RX_{1,j}$) connected, respectively, to three transmitter modules (e.g., 23) and four receiver modules (e.g., 25), but these numbers are not limiting and other numbers are also possible, such as five transmitter modules 23 and six receiver modules 25. Each radar device 1 also includes a chirp generator 21 which is configured and connected to supply a chirp input signal 22 to the transmitter module(s) 23. To this end, the chirp generator 21 is connected to receive a separate and independent local oscillator (LO) signal and a chirp start trigger signal, though delays are likely to be different due to the signal path differences and programmable digital delay elements in the signal paths. Chirp signals are generated and transmitted to multiple transmitters 23, usually following a pre-defined transmission schedule, where they are filtered at the RF conditioning module 23A and amplified at the power amplifier 23B before being fed to the corresponding transmit antenna $TX_{1,i}$ 24 and radiated. Transmitter elements 23 can operate on time-division, frequency-division, Doppler-division, code-division or other MIMO multiplexing fashion.

The radar system 1 also includes a radar microcontroller processing unit (MCPU) 10 that is connected to supply input control signals to the radar device 20 and to receive therefrom digital output signals D1 generated by the receiver modules 25. In selected embodiments, the radar MCPU 10 may be embodied as a micro-controller unit (MCU) or other processing unit that is configured and arranged for signal processing tasks such as, but not limited to, target identification, computation of target distance, target velocity, and target direction, and generating control signals. The radar MCPU 10 may, for example, be configured to generate calibration signals, receive data signals, receive sensor signals, generate frequency spectrum shaping signals (such as ramp generation in the case of FMCW radar) and/or register programming or state machine signals for RF (radio frequency) circuit enablement sequences. In addition, the radar MCPU 10 may be configured to program the transmitter modules 23 to operate in a time-division, frequency-division, Doppler-division, code-division or other multiplexing fashion by transmitting LFM chirps for coordinated communication between the transmit antennas $TX_{1,i}$, $RX_{1,j}$.

In the example shown, each chirp generator 21 generates a chirp signal 22 in response to a chirp start trigger signal and a corresponding reference local oscillator signal (Reference LO). The resulting chirp signal 22 from each chirp generator 21 is then processed by the RF conditioning unit 23A and amplified at the power amplifier (PA) 23B which amplifies the signal to a level suitable for transmission as a radar signal by a transmitter antenna unit $TX_{1,i}$. Though not shown, it will be understood that the transmitter module 23 may include additional processing circuits, such as a digital-to-analog converter (DAC), phase shifter (or phase rotator), buffer, mixer, filter, and the like.

The radar signal transmitted by the transmitter antenna unit $TX_{1,i}$ may be reflected by one or more objects (not shown), and part of the reflected radar signal reaches the receiver antenna units $RX_{1,j}$ at the LFM MIMO radar front-end device 20. At each receiver module 25, the received (radio frequency) antenna signal is amplified by a low noise amplifier (LNA) 25A and then fed to a mixer 25B where it is mixed with the transmitted chirp signal generated by the RF conditioning unit 23A. The resulting intermediate frequency signal is fed to a band-pass filter (BPF) 25C and may also be amplified and/or filtered with additional receive processing elements (not shown) before being fed to an analog/digital converter (ADC) 25D and output by each receiver module 25 as a digital signal D1.

At the radar MCPU 10, the digital signal D1 is processed by the radar modules 12-17 to detect and measure target returns. For example, the digital output signals D1 may be processed by one or more fast Fourier transform (FFT) modules 12, such as a fast-time (range) FFT module 13 and slow-time (Doppler) FFT module 14, thereby generating a three-dimensional range-Doppler map (RDM). In turn, the RDM outputs are then passed through one or more constant false alarm rate (CFAR) detector modules 15 to obtain the range-Doppler peak detections which are processed by the MIMO array measurement construction module 16 to construct MIMO arrays for use by the target direction of arrival estimation module 17 to estimate the direction of arrival for the target return(s). In addition, there are one or more additional radar return data processing steps that may be performed, such as spatial angle estimation processing, target tracking processing, and measurement processing, with the result being output to other automotive computing or user interfacing devices for further process or display.

For automotive radar systems where mechanical rotation is not allowed, the field-of-view (FOV) and the range coverage pattern are highly depended on the array radiation pattern/beam pattern generated by the transmit antennas $TX_{1,i}$ 24, where higher gain and wider angular coverage translate to longer detection range and broader FOV. In particular, a higher gain and narrower FOV is desired for long-range radar (LRR) detection of targets in front of the vehicle. However, for targets on the sides of the vehicle, a wider FOV and relatively lower gain compared to broadside is acceptable through mid-range radar (MRR). Unfortunately, switching between such two different type of radars is cumbersome and costly, and can also reduce the accuracy of radar detection.

To enable cost-effective simultaneous dual-range mode operation for both LRR and MRR applications, the transmit antenna array 24 may be implemented with a passive beam shaping transmit antenna array structure 30. As depicted, the transmit antenna array structure 30 is a compact antenna array configuration and feeding network design which includes a stacked arrangement of a first bottom feeding network/power divider layer 31, a substrate layer 32, a shared ground layer with coupling slots 33, a superstrate layer 33, and a top radiator element layer 35 which includes a plurality of transmit antenna or radiator elements 35A-E. In this stacked arrangement, the bottom feeding network/power divider layer 31 and radiator elements 35A-E are located on opposed sides of sharing ground layer 33 which includes small coupling apertures 33A-E which are positioned and aligned to allow the power coupling from the feeding network/power divider layer 31 to the radiator elements 35A-E. For example, a distal end of a first bottom feeding network/power divider segment 31A as aligned through a first coupling aperture 33A with a distal end of a first transmit antenna or radiator element 35A. In addition, a distal end of a second bottom feeding network/power divider segment 31B as aligned through a second coupling aperture 33B with a distal end of a second transmit antenna or radiator element 35B, and so on. As depicted, the vertical stacking of the feeding network/power divider layer 31 and the top radiator element layer 35 allows a denser placement of radiator elements 35A-E on the radiating side of the board, thereby mitigating the grating lobe issue of the MIMO array. In addition, by adjusting the structure and layout of the conductive elements in the feeding network/power divider layer 31 and coupling apertures 33A-E, the power distribution and phase offset can be finely tuned to use the radiator elements 35A-E to provide both LRR and MRR detection.

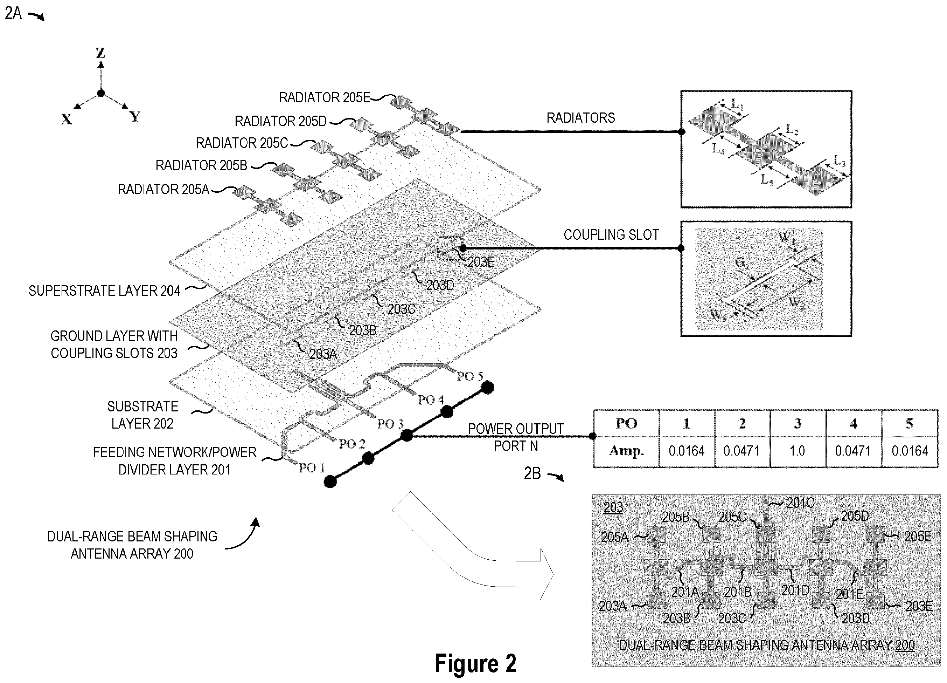

To provide additional details for an improved understanding of selected embodiments of the present disclosure, reference is now made to Figure 2 which depicts a perspective view 2A and plan view 2B of a dual-range beam shaping transmit antenna array structure 200 that includes a stacked arrangement of a bottom feeding network/power divider layer 201, a substrate layer 202, a shared ground layer 203 with coupling slots 203A-E, a superstrate layer 204, and a top radiator element layer 205 having a plurality of transmit antenna or radiator elements 205A-E. Thus formed, the dual-range beam shaping transmit antenna array structure 200 generates a unique radiation pattern coverage with optimized power allocation and phase offset to the desired directions which are highly aligned with the real-world radar range coverage requirements, for both long and mid-range coverage. In particular, the unique radiation pattern concentrates more power to the central direction (e.g., -10 to 10 degrees) where LRR detection is required, and simultaneously spreads the rest of the power to off-center directions that demand MRR vision (e.g., -40, 40 degrees).

To achieve the desired radiation pattern, the bottom feeding network/power divider layer 201 may be embodied as a five-way feeding network and power divider having a plurality of distributed power output elements PO1-5 that are aperture-coupled through the ground layer coupling slots 203A-E to the transmit antenna or radiator elements 205A-E. In accordance with the present disclosure, the feeding network/power divider layer 201 is a modified coupled-line coupler and unbalanced power divider wherein the "isolated port" is used as the output port, and the "coupled port" is used to provide a compact design for splitting power for delivery to the aperture-coupled transmit antenna or radiator elements 205A-E. In the depicted example, the feeding network/power divider layer 201 includes a central feeding line conductor 201C which terminates in a first power output element PO3, and which is couple-line coupled between a symmetric pair of unbalanced power dividers 201A-B, 201D-E. As shown, each unbalanced power divider includes a first adjacent feeding line conductor 201B, 201D formed as an S-shaped conductor element which terminates in a power output element PO2, PO4. Each unbalanced power divider also includes a second adjacent feeding line conductor 201A, 201E which is connected over a power-constricting conductor element, such as narrow or constricted conductor segment, to the S-shaped conductor element and which terminates in an outermost power output element PO1, PO5.

By properly designing the bottom feeding network/power divider layer 201 for aperture-coupled stacking beneath radiator elements 205A-E, the power distribution and phase offset to the radiator elements 205A-E can be flexibly controlled and delivered. For example, the depicted feeding network/power divider layer 201 receives the input power for distribution at the central feeding line conductor 201C, and therefore generates a full amplitude (e.g., normalized value of "1") at the first power output element PO3, while the power coupled onto the first adjacent feeding line conductors 201B, 201D generates a smaller, scaled amplitude (e.g., ".0471") at the first adjacent power output elements PO2, PO4. Similarly, the power provided to the second adjacent feeding line conductors 201A, 201E generates an even smaller, scaled amplitude (".0164") at the second adjacent power output elements PO1, PO5. well as the dimension of radiators and coupling aperture.

Instead of using metal vias and waveguide transitions to connect the feeding network and radiators, a shared ground layer 203 with coupling slots 203A-E may be formed with a conductive layer (e.g., copper) that is stacked between the bottom feeding network/power divider layer 201 and top radiator element layer 205 and separated therefrom, respectively, by the substrate layer 202 and superstrate layer 204. The coupling slots 203A-E may be formed in the shared ground layer 203 using any suitable patterned etch process for forming openings in the conductive shared ground layer 203. In addition, the substrate layer 202 and superstrate layer 204 may each be formed with any suitable dielectric material, such as a Rogers RO3003 high frequency laminate. As illustrated, each coupling slot 203A-E may be formed as an "I" shaped opening defined by a central gap (having dimensions $G_1 \times W_2$) positioned between matching endpoint openings (having dimensions $W_1 \times W_3$). In alignment with the coupling slots 203A-E, a corresponding plurality of transmit antenna or radiator elements 205A-E are formed in the top radiator element layer 205 using any suitable fabrication process. As illustrated, each radiator elements 205A-E may be formed from a patterned conductive layer (e.g., copper) with three square or rectangular-shaped conductors (having with dimension $G_1$ and length dimensions $L_1$, $L_2$, $L_3$) connected by a narrow central conductor so as to be spaced apart from one another (by length dimensions $L_4$, $L_5$).

As indicated in the plan view 2B of Figure 2, the distributed power output elements PO1-PO5 from the feeding network/power divider layer 201 are arranged and positioned for alignment through the coupling slots 203A-E to the radiator elements 205A-E. In particular, the power output nodes P01-P05 at the distal ends of each bottom feeding network/power divider segment 201A-E are aligned through a corresponding coupling aperture 203A-E with a distal end of the transmit antenna or radiator element 205A-E. As will be appreciated, phase control at each feeding network/power divider segment 201A-E can be implemented by adjusting the shape of the first and second adjacent feeding line conductor 201A-B, 201D-E. For example, the length and curvature of the S-shaped conductor elements can be changed to manipulate the resulting phase as desired. In addition, the number of the radiators and the power amplitude generated at each power output element P0-P5 can also be modified based on the desired radiation pattern.

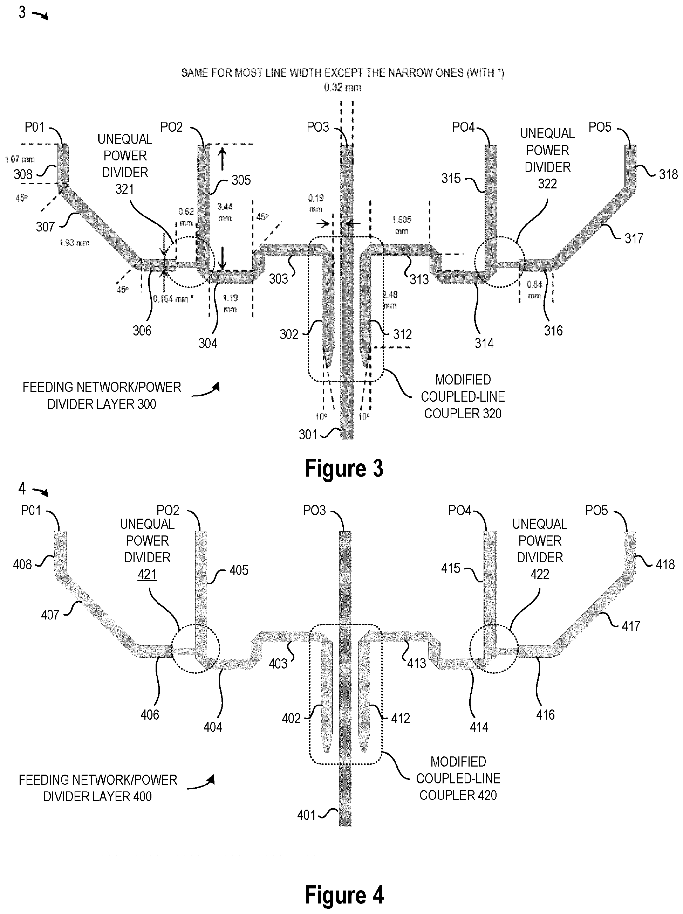

To provide additional details for an improved understanding of selected embodiments of the present disclosure, reference is now made to Figure 3 which depicts a plan view layout 3 of a feeding network layer 300 which implements a single-input power divider circuit. As depicted, the feeding network layer 300 includes a central feeding line conductor 301 having first width dimension (e.g., .32 mm) which is connected to provide input power at a first power output element PO3. On each side of the central feeding line conductor 301, a symmetric pair of unbalanced power dividers 302-308, 312-318 are disposed for couple-line coupling with the central feeding line conductor 301 over a defined gap dimension (e.g., .19 mm). As shown, each unbalanced power divider includes a first adjacent feeding line conductor 302-305, 312-315 that may be formed as an S-shaped conductor element having defined width, length, and angle dimensions which terminates in a power output element PO2, PO4. Each unbalanced power divider also includes a second adjacent feeding line conductor 306-308, 316-318 that may be formed with defined width, length, and angle dimensions to terminate in an outermost power output element PO1, PO5. Each depicted second adjacent feeding line conductor 306-308, 316-318 is connected over an unequal power divider segment 321, 322 to the S-shaped conductor element 302-305, 312-315. When implemented with a narrow or constricted conductor, the unequal power divider segment 321, 322 reduces the amount of power delivered to the outermost power output elements PO1, PO5 as compared to the inner power output elements PO2, PO4. With the example width, length, and angle dimensions for the feeding line conductors identified in Figure 3, the symmetric pair of unbalanced power dividers 302-308, 312-318 divide the input power provided to the central feeding line conductor 301 for in-phase distribution to the power output elements PO1-PO5. Of course, other width, length, and angle dimensions may be used for the feeding line conductors 302-308, 312-318 to divide the input power to obtain any desired power output levels at the power output elements PO1-PO5.

As will be appreciated, there are a variety of different ways to divide and allocate the power along the feeding network. For example, the adjacent feeding line conductors could use different widths to scale the power that is allocated to different power output elements PO1-PO5. In addition or in the alternative, the gap distance between coupled-line coupling elements could be increased (to reduce the coupled power amplitude) or decreased (to increase the coupled power amplitude). In addition or in the alternative, the unequal power divider segments 321, 322 could be replaced with a coupled-line coupling element to connect the first and second adjacent feeding line conductors. In addition or in the alternative, the coupled-line connection between the central feeding line conductor 301 and first adjacent feeding line conductors could be replaced with a narrow or constricted conductor segment.

To provide additional details for an improved understanding of selected embodiments of the present disclosure, reference is now made to Figure 4 which depicts a power magnitude heat map 4 of a feeding network layer 400 shown in Figure 3. As depicted, the feeding network layer 400 includes a central feeding line conductor 401 that is couple-line coupled to a symmetric pair of unbalanced power dividers 402-408, 412-418 which each include a first adjacent feeding line conductor 402-405, 412-415 and a second adjacent feeding line conductor 406-408, 416-418 that is connected over an unequal power divider segment 421, 422 to the first adjacent feeding line conductor 402-405, 412-415. As depicted with the darker coloring of the central feeding line conductor 401, the input power received by the feeding network layer 400 is generated at the first power output element PO3 with a full amplitude (e.g., normalized value of "1"). However, the relatively lighter coloring of the first adjacent feeding line conductors 402-405, 412-415 indicates that the couple-line coupled power generated at the first adjacent power output elements PO2, PO4 is a smaller, scaled amplitude (e.g., ".0471"). Similarly, the relatively lightest coloring of the second adjacent feeding line conductors 406-408, 416-418 indicates that the power generated at the second adjacent power output elements PO1, PO5 an even smaller, scaled amplitude (".0164").

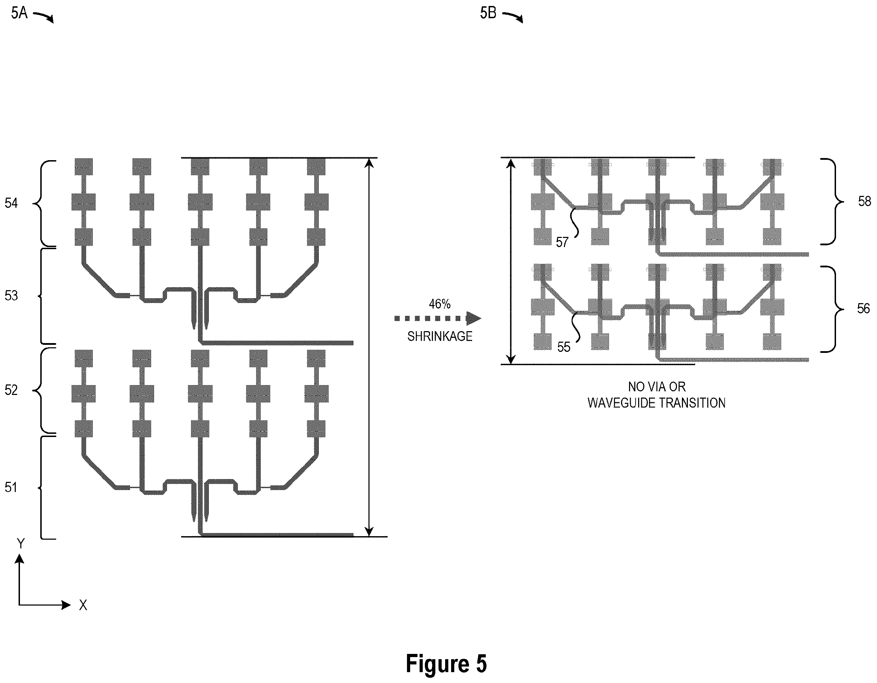

To provide a contextual understanding of selected embodiments of the present disclosure, reference is now made to Figure 5 which is a circuit layout comparison between a traditional feeding network 5A and a stacked dual-range beam shaping transmit antenna array 5B. As depicted in the traditional feeding network 5A, each feeding network 51, 53 is placed on the antenna board adjacent to and on the same layer as the antenna array 52, 54. As a result, the feeding network 51, 53 is occupying limited room in the antenna board. This use of the antenna board for the feeding network consumes valuable space that could otherwise be used for antenna array(s). In addition, the adjacent placement of the feeding network/power divider layer 51, 53 and antenna array 52, 54 can result in undesired radiation from the remote feeding network which interferes with radiation performance of the antennas 52, 54. In contrast, the stacked dual-range beam shaping transmit antenna array 5B places each feeding network 55, 57 on the antenna board in a stacked arrangement below the corresponding antenna array 56, 58. This stacked arrangement significantly reduces the required antenna board area without reducing the size of the antenna arrays. For example, the depicted stacked dual-range beam shaping transmit antenna array 5B reduces the size by 46% as compared to the traditional feeding network 5A. In addition, the stacked arrangement of feeding network/power divider layer 55, 57 and antenna arrays 56, 58 helps prevent undesired radiation from being generated from a remote feeding network which can cause undesired grating lobes.

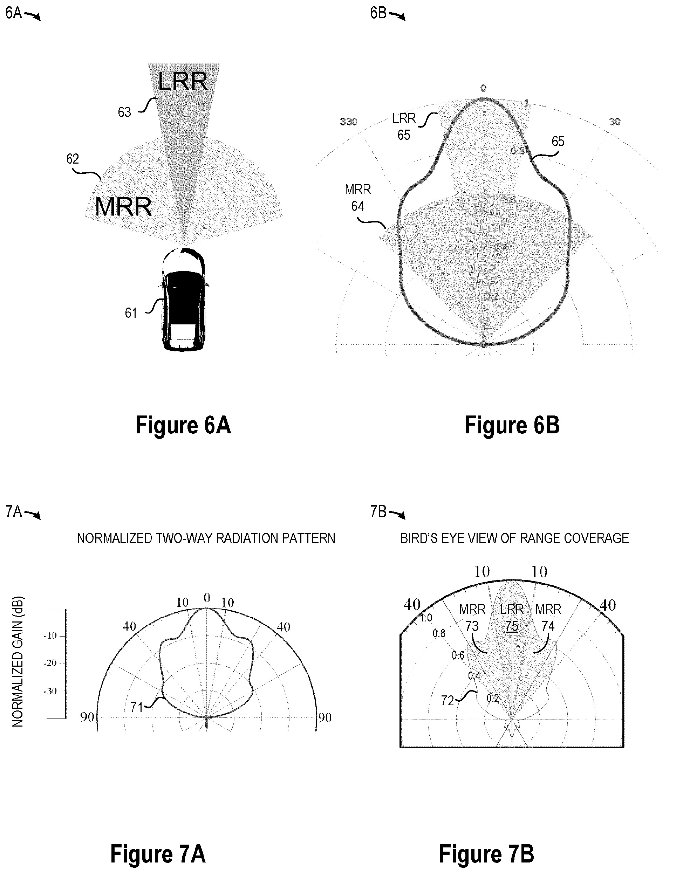

As referenced hereinabove, automotive radar systems have different Field of View (FoV) requirements for LRR (which requires a high gain and a narrow FOV) and MRR (which requires a relatively lower gain and a wider FOV). These different FOV requirements are illustrated in Figure 6A which depicts a vehicle 61 with a first medium range radar range coverage area 62 and a second long range radar coverage area 63. Traditionally, automotive radar products met the different FoV requirements by using different transmitting antennas with a narrow and wide beam in azimuth for LRR and MRR scenarios, respectively. For example, 3 dB beamwidths in the azimuth for LRR and MRR sensors may be ±10° and ±40°, respectively, while the 3 dB beamwidths in elevation for LRR and MRR sensors may both be ±5°. To meet these different FoV requirements, two different sets of transmit antennas can be used to switch between a first set of high-gain LRR transmit antennas and a second set of low-gain MRR transmit antennas. Alternatively, different waveform settings for a set of transmit antennas could be generated, including a long-range setting and medium-range setting. The drawbacks of such switching solutions include poor power efficiency (due to loss of mmW power from switching losses), larger circuit area requirements (due to using multiple transmit antenna arrays), and increased signal processing complexity for processing the different transmitter signals.

To avoid these drawbacks, a dual-range radar transmit antenna is disclosed herein which provides a compact beam shaping antenna array that simultaneously supports the FOV requirements of both LRR and MRR applications by effectively combining the range patterns that encompass the two FOVs 62, 63. An example combined long and medium range radar (LMRR) range coverage pattern 65 is shown in Figure 6B which depicts an ideal normalized range vs. angle of the MIMO radar with proposed weighting and phase offset in accordance with selected embodiments of the present disclosure. The LMRR range coverage pattern 65 was simulated based on the dual range beam shaping transmit antenna array 200 shown in Figure 2 which includes the stacked feeding network/power divider 201 and 3-section series patch radiator elements 205 which are fed in phase but with different current amplitudes. However, instead of simulating the radiation pattern of the power transmitted by the antennas, the LMRR range coverage pattern 65 is computed to simulate the range coverage area based on the two-way pattern of both TX and RX in which a typical series-fed patch antenna is used for the RX element. In particular, the LMRR range coverage pattern 65 shows the combined normalized range values for detecting targets in the MRR region 64 and LRR region 65. In the LMRR range coverage pattern 65, the radar range extends furthest directly in front of the vehicle (at angle "0" degrees) where the normalized range value is "1," and has a shorter range to the side of the vehicle (at angle "30" degrees) where the normalized range value is approximately "0.65." As seen, the ideal normalized LMRR range coverage pattern 65 substantially encompasses the FoV requirements for both the MRR region 64 and LRR region 65, excluding only peripheral angular portions at the outer extremities. The realized LMRR range coverage pattern 65 also aligns better with the general traffic direction on both left and right sides which is highly desired.

To simulate the LMRR range coverage pattern 65, the actual range value at each angle R(φ) is computed with the following equation:

$$R(\varphi) = \left[\frac{P_{tx}G_{tx}(\varphi)G_{rx}(\varphi)G_{proc}\sigma\lambda^2}{(4\pi)^3F^4LK_bN_fT_aB_nSNR}\right]^{\frac{1}{4}} \tag{1}$$

where φ is the angle, $P_{tx}$ is the transmit power, $G_{tx}$ is the gain of the transmitter, $G_{rx}$ is the gain of each receiver, $G_{proc}$ is the processing gain, σ is the radar cross section of the target, λ is freespace wavelength, F is the multipath propagation loss factor, L is the system loss, $K_b$ is Boltzmann's Constant, $T_a$ is the ambient temperature, $N_f$ is the noise figure, $B_n$ is the RX noise bandwidth, and SNR is the signal-to-noise ratio. To simplify the actual range computation as a function of the antenna gain values $G_{tx}(\varphi)$, $G_{rx}(\varphi)$, the actual range value equation may be rewritten as:

$$R(\varphi) = C_s[G_{tx}(\varphi)G_{rx}(\varphi)]^{\frac{1}{4}} \tag{2}$$

where $C_s = \left[\frac{P_{tx}G_{proc}\sigma\lambda^2}{(4\pi)^3F^4LK_bN_fT_aB_nSNR}\right]^{\frac{1}{4}}$. However, in order to verify the LRR and MRR operation, it is only required to compute the normalized range coverage as a function of the antenna gain values $G_{tx(\varphi)}$, $G_{rx}(\varphi)$ which can be computed as

Rnormalized($\varphi$) = R($\varphi$)/max{R()}.

To provide additional details for an improved understanding of the present disclosure, reference is now made to Figure 7A which depicts a normalized two-way radiation pattern 71 of an automotive radar system using a dual-range beam shaping transmit antenna array in accordance with selected embodiments of the present disclosure. The radiation pattern 71 of the phase array is the multiplication of the antenna pattern and array factor, and illustrates how the power is distributed to the transmit antennas. In addition, Figure 7B depicts the normalized range coverage 72 of a dual-range beam shaping transmit antenna array in accordance with selected embodiments of the present disclosure. In contrast to the radiation pattern 71, the normalized range coverage 72 provides the most coverage in the LRR coverage area 75 in the front central direction (e.g., -10 to 10 degrees) where LRR detection is required, and simultaneously spreads the rest of the power to off-center directions in the MRR coverage areas 73, 74 that demand MRR vision (e.g., -40, 40 degrees). As seen with the LRR and MRR coverage areas 73-75, the normalized range coverage 72 provides superior range performance for the radar system compared to conventional MIMO radars.

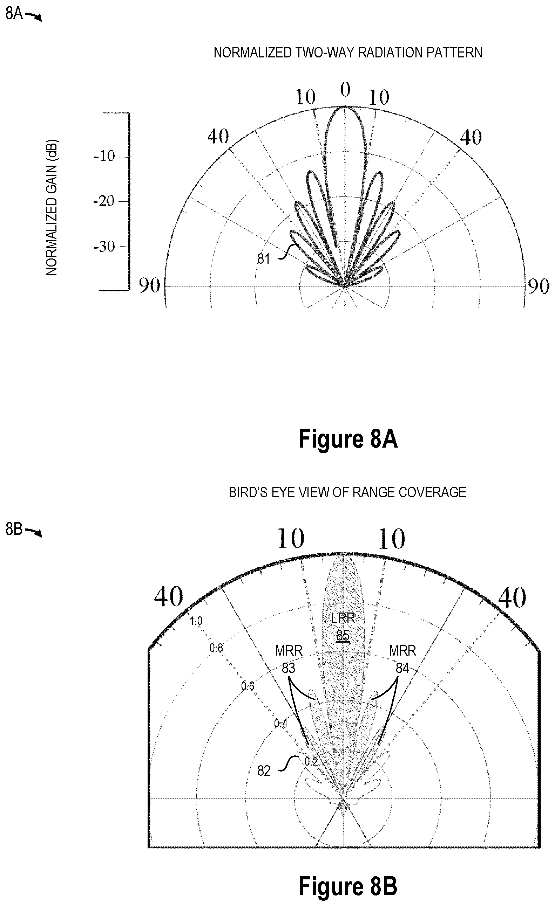

To illustrate the performance advantages over conventional long-range transmit antenna arrays, reference is now made to Figure 8A which depicts a normalized two-way radiation pattern 81 of an automotive radar system using a conventional long-range transmit antenna array. As depicted, the radiation pattern 81 includes high-lobes and deep nulls that create uneven range coverage and blind angles which are highly undesirable in terms of target detection if a target is located in one of the null positions, and therefore "blind" to the radar. The large lobe and deep null features in the radiation pattern 81 also affect the normalized range coverage, as shown in Figure 8B which depicts the normalized range coverage 82 of an automotive radar system using a conventional long-range transmit antenna array. In contrast, the normalized two-way radiation pattern 71 shown in Figure 7A is a smooth two-way pattern without pronounced high lobes and deep nulls, and the resulting normalized range coverage 72 has maximized smooth range coverage that does not have any blind angles.

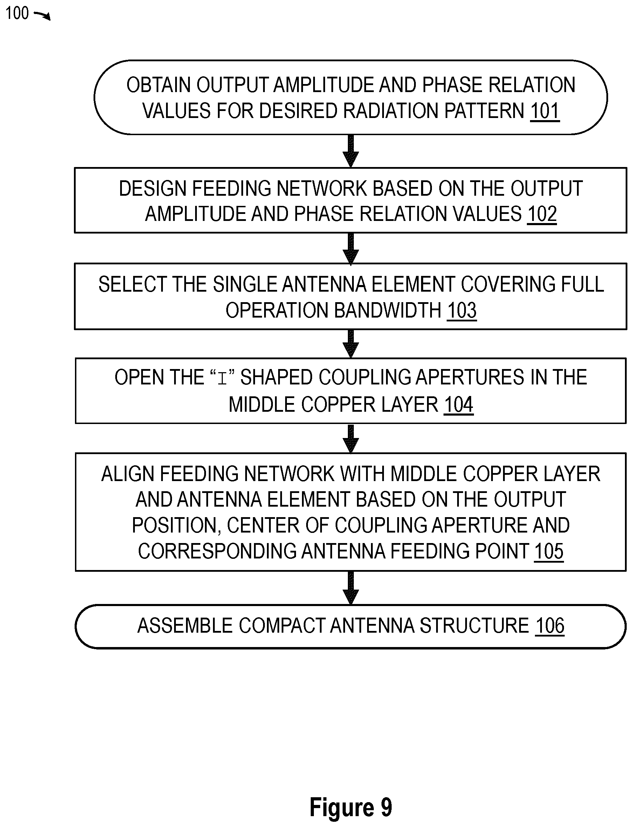

To provide additional details for an improved understanding of selected embodiments of the present disclosure, reference is now made to Figure 9 illustrates a simplified flow chart 100 showing the process steps for designing and constructing a dual-range beam shaping transmit antenna array. The process starts (step 101) by computing, finding, or obtaining the transmit antenna output amplitude and phase relation values for the desired radiation output by the transmit antenna radiators. At this step, the number, shape, and distribution of radiating elements will affect the computation of the output amplitude and phase relation values that area needed to generate a single radiation pattern that simultaneous supports both long-range and mid-range coverage. For example, in a radar system which includes five 3-section series patch radiator elements TX1-TX5 which are uniformly distributed and fed in phase, the output amplitude for the center radiator TX3 may have a full power amplitude (e.g., normalized value of "1"), while the power output amplitude for the first adjacent radiators TX3, TX4 may have a smaller, scaled amplitude (e.g., ".0471") and the power output amplitude for the outermost radiators TX1, TX5 may have an even smaller, scaled amplitude (".0164"). In this example, the radiator elements TX1-TX5 are excited in phase (zero phase progression), and the phase control can be implemented to generate different phase values at the radiator elements TX1-TX5 to further manipulate the formed radiation pattern.

At step 102, the power dividing feeding network is designed based on the predetermined amplitude and phase relation values from step 101. In accordance with the present disclosure, the power dividing feeding network may be designed as a single-port feeding network which is coupled-line coupled to a multi-way power divider for generating the transmit antenna output amplitude and phase relation values. For example, the power dividing feeding network may be designed to include a central feeding line conductor which is connected to provide input power at a first power output element PO3. The power dividing feeding network may also include a symmetric pair of unbalanced power dividers disposed around each side of the central feeding line conductor, where each unbalanced power divider includes a first adjacent S-shaped feeding line conductor terminating in a power output element PO2, PO4, and also includes a second adjacent feeding line conductor terminating in an outermost power output element PO1, PO5 and connected to the first adjacent S-shaped feeding line conductor over a narrow or constricted conductor segment. As disclosed herein, the phase control required at the radiator elements can be implemented by controlling the shape and connection of the feeding line conductors in the power dividing feeding network.

At step 103, the single antenna element is selected that covers the full operational bandwidth. For example, a transmit antenna selection step may use a design in which a plurality of 3-section series patch radiator elements TX1-TX5 are uniformly or non-uniformly distributed and laterally positioned to provide target detection in a specified direction.

At step 104, "I" shaped coupling apertures are opened at predetermined positions in the middle copper layer. In selected embodiments, the coupling apertures may be formed in the middle copper layer using any suitable fabrication process to define a plurality of I" shaped openings, such as by using a patterned etch, stamp, or laser etch process to form "I" shaped openings in the middle copper layer. As formed, each "I" shaped coupling aperture may include a central gap opening (having gap width and length dimensions) positioned between matching endpoint openings (having endpoint width and length dimensions). By matching the gap length dimension with a patch width dimension of the transmit antenna, each coupling aperture can enable uniform electric fields to be aperture coupled between the corresponding feeding line conductor and radiator element.

At step 105, the power dividing feeding network is aligned with middle copper layer and antenna element based on the output position, the center of coupling aperture(s), and corresponding antenna feeding point. In selected embodiments, the alignment step positions the middle copper layer in a stack between the antenna elements layer and the lower power dividing feeding network layer so that the "I" shaped coupling apertures are positioned to provide a coupling path between each feeding line conductor output node and its corresponding antenna element. For example, each coupling aperture may be centered with respect to a corresponding antenna feeding point by positioning each "I" shaped coupling aperture in alignment between a distal end of an underlying feeding line conductor and a distal end of an overlying transmit antenna or radiator element.

As disclosed herein, a compact dual-range automotive radar transmit beam shaping array is provided for a vehicle radar system, apparatus and method which generates a combined long and medium range radar (LMRR) range coverage pattern by vertically stacking a power divider feeding network layer, coupling aperture layer, and radiating antenna array layer so that the radiating elements in the radiating antenna array layer are aperture-coupled to corresponding feeding line conductors in the power divider feeding network layer. By vertically stacking the layers, the compact radar transmit beam shaping array enables more antenna elements to be included with smaller spacing requirements. In addition, the disclosed transmit beam shaping array provides a cost-effective solution for simultaneously supporting both medium-range and long-range radars with a smooth two-way antenna pattern having minimized deep nulls and high lobes to eliminate blind angles and to optimize range coverage. These benefits are obtained by using a distributed element based single-port feed network which is stacked below, and aperture-coupled to, a plurality of radiating elements to generate the desired power amplitude profile at the radiating elements without requiring metal via, waveguide, active phase shifter or extra PCB board space on antenna side. The stacked positioning of the power divider feeding network layer and radiating antenna array also reduces interference radiation that could otherwise be generated by a remotely positioned feeding network. The disclosed compact radar transmit beam shaping array can be used with next-generation simultaneous long-range radar (LRR) and mid-range radar (MRR).

By now it should be appreciated that there has been provided a dual-range radar system, device, and method of operation of using a compact beam shaping array. The disclosed radar system includes a radio-frequency (RF) transmitter unit connected to a long and medium range radar (LMRR) beam shaping antenna array which includes a plurality of transmit radiator elements stacked over a power dividing feeding network and separated by a conductive coupling aperture layer having a plurality of coupling apertures, wherein each transmit radiator element is aligned through a corresponding coupling aperture to a corresponding feeding line conductor from the power dividing feeding network. In selected embodiments, LMRR beam shaping antenna array may also include an insulating superstrate layer sandwiched between the plurality of transmit radiator elements and conductive coupling aperture layer, and may also include an insulating substrate layer sandwiched between the conductive coupling aperture layer and the power dividing feeding network. In selected embodiments, each of the plurality of transmit radiator elements includes a multi-section series patch antenna. In other embodiments, the power dividing feeding network includes a central feeding line conductor terminating in a high power output element, and also includes a symmetric pair of unbalanced power dividers disposed on opposite sides of the central feeding line conductor, where each unbalanced power divider includes a first adjacent feeding line conductor terminating in a lower power output element, and a second adjacent feeding line conductor terminating in a lowest power output element. In such embodiments, the central feeding conductor may be coupled-line coupled to the symmetric pair of unbalanced power dividers. In addition, the first adjacent feeding line conductor may be connected to the second adjacent feeding line conductor over a narrow conductor segment. The disclosed radar system also includes a radar control processing unit connected and configured to control the RF transmitter unit to generate a radiated beam by the LMRR beam shaping antenna array which has a range coverage pattern with more power concentrated along a central direction axis for long range detection and less power spread off to sides of the central direction axis for medium range detection. In selected embodiments, the radiated beam generated by the LMRR beam shaping antenna array has more power concentrated within -10 to 10 degrees of the central direction axis for long range detection, and has less power concentrated within -10 to -40 degrees and within 10 to 40 degrees from the central direction axis for medium range detection.

In another form, there is provided a method for operating a radar system and device. In the disclosed methodology, MIMO radar signals are transmitted from a long and medium range radar (LMRR) beam shaping antenna array at a radio-frequency (RF) transmitter unit which includes a plurality of transmit radiator elements stacked over a power dividing feeding network and separated by a conductive coupling aperture layer which has a plurality of coupling apertures, wherein each transmit radiator element is aligned through a corresponding coupling aperture to a corresponding feeding line conductor from the power dividing feeding network. When transmitting the MIMO radar signals from the LMRR beam shaping antenna array, the radiated beam is generated to have more power concentrated within -10 to 10 degrees of the central direction axis for long range detection, and has less power concentrated within -10 to -40 degrees and within 10 to 40 degrees from the central direction axis for medium range detection. In selected embodiments, the MIMO radar signals are transmitted from the LMRR beam shaping antenna array by energizing each of the plurality of transmit radiator elements by coupling power generated by the power dividing feeding network through the plurality of coupling apertures to energize the plurality of transmit radiator elements. In other embodiments, the MIMO radar signals are transmitted from the LMRR beam shaping antenna array by providing input power to a central feeding line conductor of the power dividing feeding network which is aperture-coupled to energize a first transmit radar element with a first high output power level, and also coupled-line coupling the input power to a first symmetric pair of adjacent feeding line conductors which are aperture-coupled to energize, respectively, a second and third transmit radar element with a second lower output power level. In addition, the first symmetric pair of adjacent feeding line conductors may be connected over a power-constricting conductor element to an outer pair of adjacent feeding line conductors to energize, respectively, a third and fourth transmit radar element with a third lowest output power level. In other embodiments, the MIMO radar signals are transmitted from the LMRR beam shaping antenna array by receiving an input power signal at the power dividing feeding network which includes a passive feeding network for coupling the input power signal with controlled power distribution and phase offset to a plurality of feeding line conductors in the power dividing feeding network which are aperture-coupled to the plurality of transmit radiator elements. In addition, the disclosed methodology receives MIMO radar signal returns at receive antennas in a radio-frequency (RF) receiver unit. The disclosed methodology also processes the MIMO radar signal returns at a radar control processing unit to identify one or more targets in the MIMO radar signal returns. In operation, the radar control processing unit is connected and configured to control the RF transmitter unit to generate a radiated beam by the LMRR beam shaping antenna array which has a range coverage pattern with more power concentrated along a central direction axis for long range detection and less power spread off to sides of the central direction axis for medium range detection.

In yet another form, there is provided a radar apparatus and associated method of operation. In the disclosed radar apparatus, a transmitter is configured to transmit MIMO radar signals from a long and medium range radar (LMRR) beam shaping antenna array at a radio-frequency (RF) transmitter unit which includes a plurality of transmit radiator elements stacked over a power dividing feeding network and separated by a conductive coupling aperture layer having a plurality of coupling apertures, wherein each transmit radiator element is aligned through a corresponding coupling aperture to a corresponding feeding line conductor from the power dividing feeding network. In selected embodiments, each of the plurality of transmit radiator elements may be embodied as a three-section series patch antenna. In other embodiments, the LMRR beam shaping antenna array further may include an insulating superstrate layer sandwiched between the plurality of transmit radiator elements and conductive coupling aperture layer, and an insulating substrate layer sandwiched between the conductive coupling aperture layer and the power dividing feeding network. In still other embodiments, the power dividing feeding network a central feeding line conductor, a first symmetric pair of adjacent feeding line conductors, and a second symmetric pair of adjacent feeding line conductors. The central feeding line conductor is connected to provide input power to the power dividing feeding network, where a distal end of the central feeding line conductor is aperture-coupled to energize a first transmit radar element with a first high output power level. In addition, the first symmetric pair of adjacent feeding line conductors is disposed around the central feeding line conductor, where distal ends of the first symmetric pair of adjacent feeding line conductors are aperture-coupled to energize, respectively, a second and third transmit radar element with a second lower output power level. In addition, the second symmetric pair of adjacent feeding line conductors is peripherally disposed on opposite sides of the first symmetric pair of adjacent feeding line conductors, where distal ends of the second symmetric pair of adjacent feeding line conductors are aperture-coupled to energize, respectively, a fourth and fifth transmit radar element with a third lowest output power level. In selected embodiments, the first symmetric pair of adjacent feeding line conductors are coupled-line coupled to the central feeding line conductor, and the second symmetric pair of adjacent feeding line conductors are connected to the first symmetric pair of adjacent feeding line conductors over a power-constricting conductor element. In selected embodiments, the power dividing feeding network may include a passive feeding network for coupling the input power signal with controlled power distribution and phase offset to a plurality of feeding line conductors in the power dividing feeding network which are aperture-coupled to the plurality of transmit radiator elements. The radar apparatus also includes a receiver configured to produce digital output signals from MIMO radar return signals received in response to the MIMO radar signals. In addition, the radar apparatus includes a digital signal processor configured to control the transmitter to generate a radiated beam by the LMRR beam shaping antenna array which has a range coverage pattern with more power concentrated along a central direction axis for long range detection and less power spread off to sides of the central direction axis for medium range detection. In selected embodiments, the radiated beam generated by the LMRR beam shaping antenna array has more power concentrated within -10 to 10 degrees of the central direction axis for long range detection, and has less power concentrated within -10 to -40 degrees and within 10 to 40 degrees from the central direction axis for medium range detection.

## Claims

1. A radar system, comprising:

a long and medium range radar (LMRR) beam shaping antenna array (24, 30, 200) comprising a plurality of transmit radiator elements (35A-E, 205A-E) stacked over a power dividing feeding network (31, 201) and separated by a conductive coupling aperture layer comprising a plurality of coupling apertures (33A-E, 203A-E), wherein each transmit radiator element is aligned through a corresponding coupling aperture to a corresponding feeding line (201A-E) conductor from the power dividing feeding network;

a radio-frequency (RF) transmitter unit (23) connected to the LMRR beam shaping antenna array; and

a radar control processing unit connected and configured to control the RF transmitter unit to generate a radiated beam by the LMRR beam shaping antenna array which has a range coverage pattern with more power concentrated along a central direction axis for long range detection and less power spread off to sides of the central direction axis for medium range detection;

**characterized in that**

the power dividing feeding network comprises: a central feeding line (301, 401) conductor terminating in a high power output element; and a symmetric pair of unbalanced power dividers (302-308, 312-318, 402-408, 412-418) disposed on opposite sides of the central feeding line conductor,

where each unbalanced power divider comprises: a first adjacent feeding line conductor (201B, 201D) terminating in a lower power output element, and a second adjacent feeding line conductor (201A, 201E) terminating in a lowest power output element.

2. The radar system of claim 1, wherein central feeding conductor is coupled-line coupled to the symmetric pair of unbalanced power dividers.

3. The radar system of any of claims 1 to 2, wherein the first adjacent feeding line conductor is connected to the second adjacent feeding line conductor over a narrow conductor segment.

4. A method for operating a radar system, comprising:

transmitting MIMO radar signals from a long and medium range radar (LMRR) beam shaping antenna array (24, 30, 200) at a radio-frequency (RF) transmitter unit (23) comprising a plurality of transmit radiator elements (35A-E, 205A-E) stacked over a power dividing feeding network (31, 201) and separated by a conductive coupling aperture layer comprising a plurality of coupling apertures (33A-E, 203A-E), wherein each transmit radiator element is aligned through a corresponding coupling aperture to a corresponding feeding line conductor from the power dividing feeding network;

receiving MIMO radar signal returns at receive antennas in a radio-frequency (RF) receiver unit; and

processing the MIMO radar signal returns at a radar control processing unit to identify one or more targets in the MIMO radar signal returns,

where the radar control processing unit is connected and configured to control the RF transmitter unit to generate a radiated beam by the LMRR beam shaping antenna array which has a range coverage pattern with more power concentrated along a central direction axis for long range detection and less power spread off to sides of the central direction axis for medium range detection;

**characterized in that**

transmitting MIMO radar signals from the LMRR beam shaping antenna array comprises:

providing input power to a central feeding line conductor (301, 401) of the power dividing feeding network which is aperture-coupled to energize a first transmit radar element with a first high output power level; and coupled-line coupling the input power to a first symmetric pair of adjacent feeding line conductors (201B, 201D) which are aperture-coupled to energize, respectively, a second and third transmit radar element with a second lower output power level; wherein the power dividing feeding network comprises: a central feeding line (301, 401) conductor terminating in a high power output element; and a symmetric pair of unbalanced power dividers (302-308, 312-318, 402-408, 412-418) disposed on opposite sides of the central feeding line conductor, where each unbalanced power divider comprises: a first adjacent feeding line conductor (201B, 201D) terminating in a lower power output element, and a second adjacent feeding line conductor (201A, 201E) terminating in a lowest power output element.

5. The method of claim 4, further comprising connecting the first symmetric pair of adjacent feeding line conductors over a power-constricting conductor element to an outer pair of adjacent feeding line conductors to energize, respectively, a third and fourth transmit radar element with a third lowest output power level.

6. The method of any of claims 4 to 5, where transmitting MIMO radar signals from the LMRR beam shaping antenna array comprises receiving an input power signal at the power dividing feeding network which comprises a passive feeding network for coupling the input power signal with controlled power distribution and phase offset to a plurality of feeding line conductors in the power dividing feeding network which are aperture-coupled to the plurality of transmit radiator elements.

**Patentansprüche**

1.  Radarsystem, das Folgendes umfasst:

    eine Strahlformungs-Gruppenantenne (24, 30, 200) eines Weit- und Mittelbereichsradars (LMRR-Strahlformungs-Gruppenantenne), die mehrere Sendestrahlerelemente (35A-E, 205A-E) umfasst, die über einem Leistungsteiler-Einspeisungsnetz (31, 201) geschichtet sind und durch eine leitfähige Kopplungsaperturschicht getrennt sind, die mehrere Kopplungsaperturen (33A-E, 203A-E) umfasst, wobei jedes Sendestrahlerelement durch eine entsprechende Kopplungsapertur auf einen entsprechenden Einspeisungsleitungsleiter (201A-E) vom Leistungsteiler-Einspeisungsnetz ausgerichtet ist;
    eine Funkfrequenz-Sendereinheit (RF-Sendereinheit) (23), die mit der LMRR-Strahlformungs-Gruppenantenne verbunden ist; und
    eine Radarsteuerungs-Verarbeitungseinheit, die verbunden und konfiguriert ist, die RF-Sendereinheit zu steuern, durch die LMRR-Strahlformungs-Gruppenantenne einen ausgestrahlten Strahl zu erzeugen, der ein Bereichsabdeckungsmuster aufweist, bei dem zur Weitbereichsdetektion mehr Leistung entlang einer Mittelrichtungsachse konzentriert ist und zur Mittelbereichsdetektion weniger Leistung zu den Seiten der Mittelrichtungsachse versetzt verteilt ist;
    **dadurch gekennzeichnet, dass**
    das Leistungsteiler-Einspeisungsnetz Folgendes umfasst:

    einen zentralen Einspeisungsleitungsleiter (301, 401), der in einem Hochleistungs-Ausgangselement endet; und ein symmetrisches Paar unsymmetrischer Leistungsteiler (302-308, 312-318, 402-408, 412-418), die auf gegenüberliegenden Seiten des zentralen Einspeisungsleitungsleiters angeordnet sind,
    wobei jeder unsymmetrische Leistungsteiler Folgendes umfasst: einen ersten benachbarten Einspeisungsleitungsleiter (201B, 201D), der in einem Ausgangselement mit niedrigerer Leistung endet, und einen zweiten benachbarten Einspeisungsleitungsleiter (201A, 201E), der in einem Ausgangselement mit der niedrigsten Leistung endet.

2.  Radarsystem nach Anspruch 1, wobei der zentrale Einspeisungsleiter leitungsgekoppelt mit dem symmetrischen Paar unsymmetrischer Leistungsteiler gekoppelt ist.

3.  Radarsystem nach einem der Ansprüche 1 bis 2, wobei der erste benachbarte Einspeisungsleitungsleiter über ein schmales Leitersegment mit dem zweiten benachbarten Einspeisungsleitungsleiter verbunden ist.

4.  Verfahren zum Betreiben eines Radarsystems, das Folgendes umfasst:

    Senden von MIMO-Radarsignalen von einer Strahlformungs-Gruppenantenne (24, 30, 200) eines Weit- und Mittelbereichsradars (LMRR-Strahlformungs-Gruppenantenne) bei einer Funkfrequenz-Sendereinheit (RF-Sendereinheit) (23), die mehrere Sendestrahlerelemente (35A-E, 205A-E) umfasst, die über einem Leistungsteiler-Einspeisungsnetz (31, 201) geschichtet sind und durch eine leitfähige Kopplungsaperturschicht getrennt sind, die mehrere Kopplungsaperturen (33A-E, 203A-E) umfasst, wobei jedes Sendestrahlerelement durch eine entsprechende Kopplungsapertur auf einen entsprechenden Einspeisungsleitungsleiter vom Leistungsteiler-Einspeisungsnetz ausgerichtet ist;
    Empfangen von MIMO-Radarsignalechos an Empfangsantennen in einer Funkfrequenz-Empfängereinheit (RF-Empfängereinheit); und
    Verarbeiten der MIMO-Radarsignalechos an einer Radarsteuerungs-Verarbeitungseinheit, um ein oder mehrere Objekte in den MIMO-Radarsignalechos zu identifizieren, wobei die Radarsteuerungs-Verarbeitungseinheit verbunden und konfiguriert ist, die RF-Sendereinheit zu steuern, durch die LMRR-Strahlformungs-Gruppenantenne einen ausgestrahlten Strahl zu erzeugen, der ein Bereichsabdeckungsmuster aufweist, bei dem zur Weitbereichsdetektion mehr Leistung entlang einer Mittelrichtungsachse konzentriert ist und zur Mittelbereichsdetektion weniger Leistung zu den Seiten der Mittelrichtungsachse versetzt verteilt ist;
    **dadurch gekennzeichnet, dass**

das Senden von MIMO-Radarsignalen von der LMRR-Strahlformungs-Gruppenantenne Folgendes umfasst:

Bereitstellen von Eingangsleistung für einen zentralen Einspeisungsleitungsleiter (301, 401) des Leistungsteiler-Einspeisungsnetzes, der aperturgekoppelt ist, um einem ersten Senderadarelement mit einem ersten hohen Ausgangsleistungspegel Energie zuzuführen; und

leitungsgekoppeltes Koppeln der Eingangsleistung mit einem ersten symmetrischen Paar benachbarter Einspeisungsleitungsleiter (201B, 201D), die aperturgekoppelt sind, um einem zweiten bzw. einem dritten Senderadarelement mit einem zweiten niedrigeren Ausgangsleistungspegel Energie zuzuführen; wobei das Leistungsteiler-Einspeisungsnetz Folgendes umfasst:

einen zentralen Einspeisungsleitungsleiter (301, 401), der in einem Hochleistungs-Ausgangselement endet; und ein symmetrisches Paar unsymmetrischer Leistungsteiler (302-308, 312-318, 402-408, 412-418), die auf gegenüberliegenden Seiten des zentralen Einspeisungsleitungsleiters angeordnet sind, wobei jeder unsymmetrische Leistungsteiler Folgendes umfasst: einen ersten benachbarten Einspeisungsleitungsleiter (201B, 201D), der in einem Ausgangselement mit niedrigerer Leistung endet, und einen zweiten benachbarten Einspeisungsleitungsleiter (201A, 201E), der in einem Ausgangselement mit der niedrigsten Leistung endet.

**5.** Verfahren nach Anspruch 4, das ferner das Verbinden des ersten symmetrischen Paares benachbarter Einspeisungsleitungsleiter über ein Leistung bündelndes Leiterelement mit einem äußeren Paar benachbarter Einspeisungsleitungsleiter, um einem dritten bzw. einem vierten Senderadarelement mit einem dritten, niedrigsten Ausgangsleistungspegel Energie zuzuführen, umfasst.

**6.** Verfahren nach einem der Ansprüche 4 bis 5, wobei das Senden von MIMO-Radarsignalen von der LMRR-Strahlformungs-Gruppenantenne das Empfangen eines Eingangsleistungssignals am Leistungsteiler-Einspeisungsnetz umfasst, das ein passives Einspeisungsnetz zum Koppeln des Eingangsleistungssignals mit gesteuerter Leistungsverteilung und Phasenverschiebung mit mehreren Einspeisungsleitungsleitern im Leistungsteiler-Einspeisungsnetz, die mit den mehreren Sendestrahlerelementen aperturgekoppelt sind, umfasst.

## Revendications

**1.** Système radar comprenant :

un réseau d'antennes de mise en forme de faisceaux radar à longue portée et moyenne portée (LMRR) (24, 30, 200) comprenant une pluralité d'éléments rayonnants d'émission (35A-E, 205A-E) empilés sur un réseau d'alimentation à division de puissance (31, 201) et séparés par une couche d'ouverture de couplage conductrice comprenant une pluralité d'ouvertures de couplage (33A-E, 203 A-E), où chaque élément rayonnant d'émission est aligné à travers une ouverture de couplage correspondante à un conducteur de ligne d'alimentation correspondant (201 A-E) depuis le réseau d'alimentation à répartition de puissance ;

une unité d'émetteur radiofréquence (RF) (23) connectée au réseau d'antennes de mise en forme de faisceaux LMRR ; et

une unité de traitement de commande radar connectée et configurée pour commander l'unité d'émetteur RF afin de générer un faisceau rayonné par le réseau d'antennes de mise en forme de faisceaux LMRR qui présente un diagramme de couverture de portée avec plus de puissance concentrée le long d'un axe de direction central pour la détection à longue portée et moins de puissance répartie sur les côtés de l'axe de direction central pour la détection à moyenne portée ;

**caractérisé en ce que**

le réseau d'alimentation à division de puissance comprend : un conducteur de ligne d'alimentation centrale (301, 401) se terminant dans un élément de sortie haute puissance ; et une paire symétrique de diviseurs de puissance déséquilibrés (302-308, 312-318, 402-408, 412-418) disposés sur les côtés opposés du conducteur de la ligne d'alimentation centrale,

où chaque diviseur de puissance déséquilibré comprend :

un premier conducteur de ligne d'alimentation adjacent (201B, 201D) se terminant par un élément de sortie de puissance inférieure, et un deuxième conducteur de ligne d'alimentation adjacent (201A, 201E) se terminant par l'élément de sortie de puissance la plus faible.

**2.** Système radar selon la revendication 1, dans lequel le conducteur de la ligne d'alimentation centrale est couplé par une ligne couplée à la paire symétrique de diviseurs de puissance déséquilibrés.

**3.** Système radar selon l'une quelconque des revendications 1 et 2, dans lequel le premier conducteur de ligne d'alimentation adjacent est connecté au deuxième conducteur de ligne d'alimentation adjacent sur un segment de conducteur étroit.

**4.** Procédé pour faire fonctionner un système radar, comprenant les étapes suivantes :

transmettre des signaux radar MIMO depuis un réseau d'antennes de mise en forme de faisceaux radar à longue portée et moyenne portée (LMRR) (24, 30, 200) à une unité d'émetteur radiofréquence (RF) (23) comprenant une pluralité d'éléments rayonnants d'émission (35A-E, 205A-E) empilés sur un réseau d'alimentation à division de puissance (31, 201) et séparés par une couche d'ouverture de couplage conductrice comprenant une pluralité d'ouvertures de couplage (33A-E, 203 A-E), où chaque élément rayonnant d'émission est aligné à travers une ouverture de couplage correspondante à un conducteur de ligne d'alimentation correspondant depuis le réseau d'alimentation à répartition de puissance ;

recevoir les signaux radar MIMO renvoyés au niveau d'antennes de réception dans une unité de réception radiofréquence (RF) ; et

traiter les signaux radar MIMO renvoyés au niveau d'une unité de traitement de commande radar afin d'identifier une ou plusieurs cibles dans les signaux radar MIMO renvoyés,

où l'unité de traitement de commande radar est connectée et configurée pour commander l'unité d'émetteur RF afin de générer un faisceau rayonné par le réseau d'antennes de mise en forme de faisceaux LMRR qui présente un diagramme de couverture de portée avec plus de puissance concentrée le long d'un axe de direction central pour la détection à longue portée et moins de puissance répartie sur les côtés de l'axe de direction central pour la détection à moyenne portée ;

**caractérisé en ce que**

la transmission de signaux radar MIMO à partir du réseau d'antennes de mise en forme de faisceaux LMRR comprend les étapes suivantes :

fournir une puissance d'entrée à un conducteur de ligne d'alimentation centrale (301, 401) du réseau d'alimentation à division de puissance qui est couplé par ouverture pour alimenter un premier élément radar d'émission avec un premier niveau de puissance de sortie élevé ; et

coupler, par ligne couplée, la puissance d'entrée à une première paire symétrique de conducteurs de ligne d'alimentation adjacents (201B, 201D) qui sont couplés par ouverture pour alimenter, respectivement, un deuxième élément radar d'émission et un troisième élément radar d'émission avec un deuxième niveau de puissance de sortie inférieur ; où le réseau d'alimentation à division de puissance comprend : un conducteur de ligne d'alimentation centrale (301, 401) se terminant dans un élément de sortie à haute puissance ; et une paire symétrique de diviseurs de puissance déséquilibrés (302-308, 312-318, 402-408, 412-418) disposés sur les côtés opposés du conducteur de ligne d'alimentation centrale, où chaque diviseur de puissance déséquilibré comprend :

un premier conducteur de ligne d'alimentation adjacent (201B, 201D) se terminant dans un élément de sortie de puissance inférieure, et un deuxième conducteur de ligne d'alimentation adjacent (201A, 201E) se terminant dans l'élément de sortie de puissance la plus faible.

**5.** Procédé selon la revendication 4, comprenant en outre de connecter la première paire symétrique de conducteurs de ligne d'alimentation adjacents par l'intermédiaire d'un élément conducteur de restriction de puissance à une paire extérieure de conducteurs de ligne d'alimentation adjacents afin d'alimenter, respectivement, un troisième élément radar d'émission et un quatrième élément radar d'émission avec le troisième niveau de puissance de sortie le plus faible.

**6.** Procédé selon l'une quelconque des revendications 4 et 5, dans lequel la transmission de signaux radar MIMO à partir du réseau d'antennes de mise en forme de faisceaux LMRR comprend de recevoir un signal de puissance d'entrée au niveau du réseau d'alimentation à division de puissance qui comprend un réseau d'alimentation passif pour coupler le signal de puissance d'entrée avec une distribution de puissance contrôlée et un déphasage à une pluralité de conducteurs de ligne d'alimentation dans le réseau d'alimentation à division de puissance qui sont couplés par ouverture à la pluralité d'éléments rayonnants d'émission.

Figure 1

Figure 2

RADIATORS

COUPLING SLOT

| PO | 1 | 2 | 3 | 4 | 5 |
|---|---|---|---|---|---|
| Amp. | 0.0164 | 0.0471 | 1.0 | 0.0471 | 0.0164 |

POWER OUTPUT PORT N

2B

DUAL-RANGE BEAM SHAPING ANTENNA ARRAY 200

RADIATOR 205E
RADIATOR 205D
RADIATOR 205C
RADIATOR 205B
RADIATOR 205A

203E
203D
203C
203B
203A

PO 5
PO 4
PO 3
PO 2
PO 1

SUPERSTRATE LAYER 204

GROUND LAYER WITH COUPLING SLOTS 203

SUBSTRATE LAYER 202

FEEDING NETWORK/POWER DIVIDER LAYER 201

DUAL-RANGE BEAM SHAPING ANTENNA ARRAY 200

2A

EP 4 206 720 B1

**Figure 3**

**Figure 4**

Figure 5

6A

LRR

63

62

MRR

61

**Figure 6A**

6B

0

330     LRR     30
        65

1

0.8     65

MRR
64     0.6

0.4

0.2

**Figure 6B**

7A

NORMALIZED TWO-WAY RADIATION PATTERN

NORMALIZED GAIN (dB)

10   0   10
40           40
-10
-20
-30
90   71         90

**Figure 7A**

7B

BIRD'S EYE VIEW OF RANGE COVERAGE

10        10

40                              40
    1.0  MRR  LRR  MRR
    0.8   73   75   74
         0.6
         0.4
    72    0.2

**Figure 7B**

8A ⇲

NORMALIZED TWO-WAY RADIATION PATTERN

10   0   10

40          40

NORMALIZED GAIN (dB)

-10

-20

-30

81

90          90

## Figure 8A

BIRD'S EYE VIEW OF RANGE COVERAGE

8B ⇲

10        10

40          40

1.0

0.8    MRR          MRR
        83            84

0.6

LRR
85

0.4

82    0.2

## Figure 8B

100 —◄

```
┌─────────────────────────────────────────────────────┐
│  OBTAIN OUTPUT AMPLITUDE AND PHASE RELATION          │
│  VALUES FOR DESIRED RADIATION PATTERN 101            │
└─────────────────────────────────────────────────────┘
                          │
                          ▼
┌─────────────────────────────────────────────────────┐
│  DESIGN FEEDING NETWORK BASED ON THE OUTPUT          │
│  AMPLITUDE AND PHASE RELATION VALUES 102             │
└─────────────────────────────────────────────────────┘
                          │
                          ▼
┌─────────────────────────────────────────────────────┐
│  SELECT THE SINGLE ANTENNA ELEMENT COVERING FULL     │
│  OPERATION BANDWIDTH 103                             │
└─────────────────────────────────────────────────────┘
                          │
                          ▼
┌─────────────────────────────────────────────────────┐
│  OPEN THE "I" SHAPED COUPLING APERTURES IN THE       │
│  MIDDLE COPPER LAYER 104                             │
└─────────────────────────────────────────────────────┘
                          │
                          ▼
┌─────────────────────────────────────────────────────┐
│  ALIGN FEEDING NETWORK WITH MIDDLE COPPER LAYER      │
│  AND ANTENNA ELEMENT BASED ON THE OUTPUT             │
│  POSITION, CENTER OF COUPLING APERTURE AND           │
│  CORRESPONDING ANTENNA FEEDING POINT 105             │
└─────────────────────────────────────────────────────┘
                          │
                          ▼
┌─────────────────────────────────────────────────────┐
│  ASSEMBLE COMPACT ANTENNA STRUCTURE 106              │
└─────────────────────────────────────────────────────┘
```

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017309997 A1

**Non-patent literature cited in the description**

- **ABDOLAHI MOHSEN et al.** PROGRESS IN ELECTROMAGNETICS RESEARCH SYMPOSIUM - SPRING (PIERS). IEEE, 22 May 2017, 2539-2545

- Substrate Integrated Antennas for Millimeter Wave Automotive Radars. **QING XIANMING et al.** Substrate-Integrated Millimeter-Wave Antennas for Next-Generation Communication and Radar Systems. John Wiley & Sons, 23 April 2021